# EUROPEAN PATENT APPLICATION

(11) **EP 4 209 819 A1**
(43) Date of publication of application: **12.07.2023**
(21) Application number: 22150958.1
(22) Date of filing: 11.01.2022
(51) Int. Cl.: G02B 21/14, G01N 23/046, G02B 21/24, G02B 21/36, G03H 1/26

(54) **LENSFREE HOLOTOMOGRAPHIC MICROSCOPE**

(71) Applicant: Aydin, Tuelay, 81829 München (DE); Varol, Rahmetullah, 81476 München (DE)
(72) Inventor: Aydin, Tuelay, 81829 München (DE); Varol, Rahmetullah, 81476 München (DE)

(57) **Abstract**

The present invention relates to a lens-free microscopic imaging apparatus 1 for three dimensional imaging of a semi transparent object 204 within a sample 202. The apparatus comprises a rotation device, a determining device, at least one controller, a stationary part and a rotary part. The rotation device is configured to rotate the rotary part 100 of the apparatus 1 and to control the angular position of the rotary part 100 about a rotation axis 203. The determining device is configured to determine the angular position of the rotary part 100. The at least one controller is configured to control the rotation device and to generate a three dimensional information from images captured by an imaging sensor 105. The stationary part comprises a sample holder 201 configured to hold the sample 202 at a fixed position throughout an imaging process. The rotary part 100 comprises a semi or fully coherent light source, an aperture and the imaging sensor. The semi or fully coherent light source 108 is configured to illuminate the sample 202. The aperture 110 passes the light from the light source 108 along a main axis 109. The aperture 110 is arranged at a preset fixed position relative to the light source 108 throughout the imaging process. The imaging sensor 105 is arranged at a preset fixed position relative to the light source 108 and to the aperture 110 throughout the imaging process. The rotation axis 203 is perpendicular to the main axis 109.

The present invention also relates to a lens-free microscopic imaging method corresponding to operation of the apparatus.

## Description

The present invention relates to a lens-free microscopic imaging apparatus (the apparatus) for three dimensional imaging of a semi transparent object within a sample, and to a lens-free microscopic imaging method (the method) through which three dimensional information of a semi transparent object within a sample can be generated.

Sperm analysis is frequently utilized as a diagnostic tool for determining male reproductive health. Human sperm analysis is mostly used to investigate infertility in couples or to confirm the efficacy of male sterilization procedures. Furthermore, infertile men have a far higher risk of acquiring testicular cancer. Whether a man wants to have children or not, his fertility is a strong sign of his overall health. The most important parameters measured in a semen analysis are the morphology, motility and the concentration of the sperm.

As a result, altered sperm characteristics are the most common key markers of male infertility and there is a rising interest in understanding both the morphological changes in spermatozoa and the kinematics and dynamics of spermatozoa movement.

A non-invasive (without mechanical contact and without causing substantial structural changes in the sample) analytical method avoids any alteration of the vitality of the analyzed sperm, a label-free imaging approach reduces costs and eliminates any adverse effects that labels (such as fluorescent dyes) may introduce. Despite the fact that spermatozoa are nearly invisible in optical bright-field microscopy, they have a different refractive index than the surrounding medium: the phase of the light transmitted by the sample captures this refractive index variation.

Spermatozoa moving in the surrounding medium are one example of a "semi transparent object" (in the following "the object"). The analyzed plurality of sperms is one example of a "sample".

Contrast interference microscopy (phase contrast or Nomarski/Zernicke interferential contrast microscopy) can provide a qualitative image of the phase contrast. Quantitative morphological imaging, on the other hand, is difficult and time-consuming to achieve. In reality, acquiring a collection of distinct planes in focus necessitates a fine movement of the biological sample in a direction perpendicular to the planes of the biological sample. This collection of captured images along these planes is utilized to create a three dimensional image of the object under investigation in post-elaboration. This method has been used to collect data on sperm motility. Nevertheless, this two dimensional intrinsic analysis implies a partial in-plane representation of the motility features due to difficulty to track the three dimensional spatial motion of spermatozoa that quickly moves out of focus.

The Digital Holographic (DH) method is a currently common semen analysis method which is a label-free, non-invasive, high-resolution method for recording and numerical reconstruction of the phase and amplitude of the optical wavefront of a semi transparent object. Thus, without mechanically realigning the optical imaging system, three dimensional quantitative sample imaging can be obtained automatically by numerical focusing of a two dimensional image at distinct object planes. The phase information is the multiplication of refractive index value and thickness value. As such, thickness information can either be obtained by determining the refractive index value and calculating the ratio between phase and refractive index or by obtaining two solutions from which both refractive index and thickness can be determined independently. The ability to include a third dimension in sperm analysis can help researchers to better understand sperm behaviour and how it relates to male infertility.

In view of the above, the object of the present invention is to provide an improved apparatus for carrying out a non-invasive three dimensional imaging that avoids any alteration of an analyzed sample, especially one containing fast-moving objects, and a corresponding improved method.

The object is achieved by an apparatus having the features of claim 1 and by a method having the features of claim 11. Further advantageous developments of the present invention are set out in the dependent claims.

According to the present invention, a lens-free microscopic imaging apparatus for a three dimensional imaging of a semi transparent object within a sample is provided. The apparatus comprises a rotation device, a determining device, at least one controller, a stationary part and a rotary part. The rotation device is configured to rotate the rotary part and to control an angular position of the rotary part about a rotation axis. The determining device is configured to determine the angular position of the rotary part. The at least one controller is configured to control the rotation device and to generate a three dimensional information from images captured by an imaging sensor. The stationary part comprises a sample holder configured to hold the sample at a fixed position throughout an imaging process. The rotary part comprises a semi coherent or fully coherent light source, an aperture and the imaging sensor. The semi or fully coherent light source is configured to illuminate the sample throughout the imaging process. The aperture passes the light from the light source along a main axis. The aperture is arranged at a preset fixed position relative to the light source throughout the imaging process. The imaging sensor is arranged at a preset fixed position relative to the light source and to the aperture throughout the imaging process. The rotation axis is perpendicular to the main axis.

The apparatus is lens-free. That is, it does not include lenses.

Three dimensional information according to the present invention is a spatial distribution of the sample in the three dimensional space and can be presented in the form of point clouds, point cloud sequences, images (pictures) and image sequences (videos).

The sample is preferably a biological material, but could equally be any non-biological or non-organic material (such as silicon nano/micro particles or thin films) as long as it is semi transparent.

The angular position is controllable using the rotation angle or rotation rate (angular velocity) and time. Alternatively, controlling the angular position is possible by predicting, estimating or calculating it using a constant or variable angular velocity.

The determining device is not only capable of measuring the angular position by detection means such as an (angular) encoder but can be also capable of predicting or estimating the angular position using a given constant or variable angular velocity and the elapsed time. In other words, the determining device (an angular position determining device) is configured to determine the angular position of the rotary part.

The controller can include a plurality of sections for controlling the rotation device and for generating the three dimensional information from the images captured by the image sensor. The sections can be distinct controllers. In other words, the controller can also be a plurality of controllers. When more than one controller is used, the plurality of controllers can have the same level or there might be a hierarchy among them. The control functionality can be implemented by means of a specific hardware or by a software.

The generation of the three dimensional information includes two components or elements: the reconstruction and the three dimensional construction. The reconstruction includes illuminating the sample with the light from the semi or fully coherent light source without rotation of the rotary part for obtaining the thickness of the sample. The three dimensional construction includes the rotation of the rotary part about the rotation axis (i.e., about the stationary part including the sample holder with the sample placed thereon or therein) while the sample is illuminated with the light from the semi or fully coherent light source and while obtaining the thickness information from a plurality of angles that can be either periodic or aperiodic. Subsequently, this plurality of thickness information is combined for obtaining the spatial distribution of the semi transparent object in the sample.

The stationary part of the apparatus is stationary (non-rotating) during the imaging process. However, during (dis)assembly or maintenance of the apparatus or between distinct imaging processes, the stationary part or its components might be movable or rotatable.

The stationary part and the rotary part of the apparatus are the main components of the apparatus. The stationary part is preferably stationary relative to the surroundings of the apparatus during the imaging process. However, it is sufficient that the stationary part is (only) stationary relative to the rotary part. The rotary part is rotating about the rotation axis at least during the imaging process (the construction part of the imaging process). The rotary part is rotatable about the stationary part during the imaging process (the construction part of the imaging process).

The rotation axis is fixed relative to the sample holder (the sample) during the imaging process.

The imaging process according to the present disclosure means one measuring cycle or sequence in which images of the illuminated object are captured by the imaging sensor for generating three dimensional information about the object.

During one (the same) imaging process, the sample is not moved or replaced by another sample.

The duration of the construction part of the imaging process during which the rotary part rotates about the rotation axis (the sample) is preferably in the range of 20 milliseconds to 60 seconds. More preferably, the duration is in the range of 20 milliseconds to 10 seconds. Even more preferably, the duration is in the range of 20 milliseconds to 1 second. This range depends on the used imaging apparatus and thickness and density of the sample being analyzed.

Preferably, the imaging process (the measuring cycle or sequence; more precisely, the construction part of the imaging process) includes a rotation of the rotary part about the rotation axis by at least 360 degrees. More preferably, this rotation by at least 360 degrees is performed in one (the same) rotational direction, i.e., without changing the rotational direction throughout the construction part of the imaging process. In other words, the at least 360 degrees are preferably not a value which is obtainable by adding angles of a wiping (reciprocating) movement of a rotary or pivoting (moving) part. That is, the at least 360 degrees according to the present disclosure are obtained when incrementally or continuously adding together the angles by which the rotary part rotates in one (the same) direction during the same construction part of the imaging process. In an even more preferred embodiment, the rotation speed (angular velocity) of the rotary part is constant throughout the imaging process (the measuring cycle or sequence; more precisely, the construction part of the imaging process) except for a very short acceleration and deceleration of the rotary part at the beginning and the end of the rotation. The time required for the rotation speed (angular velocity) of the rotary part to reach a constant velocity typically is in the range of 0.1 to 5 seconds and depends on the selected rotation device. The constant velocity refers to the absolute value and to the direction of the velocity vector.

The sample holder includes any means which is capable of holding the sample in a stationary (non-rotating) manner during the imaging process relative to the rotary part, preferably to the surroundings of the apparatus.

The light source is a light source which generates semi coherent or (fully) coherent light. Semi coherence of light can be a temporal coherence or a spatial coherence while (full) coherence means both temporal and spatial coherence. Temporal coherence refers to light waves having the same phases. Spatial coherence refers to light waves propagating in the same direction. According to the present invention, spatial coherence is used as semi coherence. The light source may be semi coherent or (fully) coherent.

The light source according to the present invention generates visible light or light from the (near) infrared spectrum. Ultraviolet rays, X-rays, gamma rays, and microwaves are harmful to the analyzed objects (are not non-invasive) and are thus not suitable for the apparatus and method according to the present invention. Spatially coherent light is obtainable by using a small aperture. The dimension of the aperture is in the range of 5 to 100 micrometers and depends on the desired coherence of the light source determined in advance. Once the dimension is set, it is not changed during one (the same) imaging process. If the aperture is a circular hole, its dimension corresponds to its diameter. Preferably, the semi coherent light source is implemented by a light-emitting diode (LED).

Preferably, the aperture is a two dimensional element and does not extend to a notable extent in the direction in which the light from the light source propagates (i.e., in the direction of the main axis).

The light from the light source propagates towards the sample and passes through the aperture along the main axis. If the aperture is a circular hole, the main axis is the axis extending normal to the plane of the hole (primary plane of the aperture) and passing through the center of the circle. If the aperture has any other kind of symmetry, the main axis extends normal to the plane of the hole (primary plane of the aperture) constituting the aperture and passes through its point of symmetry. However, the aperture does not have to be symmetric. In this case, the main axis extends normal to the plane (primary plane of the aperture) of the hole constituting the asymmetric aperture and passes through a preset point of the hole, preferably through the centroid of the aperture.

Preferably, the light source, the aperture, a wavefront modulation device (which is preferably used and which is described below), and the imaging sensor are aligned on the main axis. More preferably, the main axis passes through the points of symmetry or centroids of the light source, the aperture, the wavefront modulation device (if used), and the imaging sensor. Alternatively or additionally, the main planes of the aperture, the wavefront modulation device and the imaging sensor are parallel to each other and are perpendicular to the main axis. These arrangements have the advantage of imaging the sample using the most uniform part of the wavefront of the light propagating from the light source.

The main axis is the main axis of the rotary part of the apparatus and can be thought of as a kind of an optical axis of the apparatus.

The main axis is the axis along which the light for illuminating the sample and capturing images by the imaging sensor mainly propagates. In other words, the propagating direction of the semi or fully coherent light for the three dimensional imaging is parallel to the main axis, except for the scattering of the light by the sample and the modulation by the wavefront modulation device (if used).

The rotation axis of the rotary part is perpendicular to the main axis. In other words, the axes have an angle of 90 degrees relative to each other. This arrangement ensures that the light source (i.e., the incident light) and the imaging sensor can generate a real three dimensional image of the object. In other words, contrary to conventional apparatuses, the object is preferably fully orbited by the light source and the imaging sensor (in fact by the rotary part) by at least 360 degrees. Therefore, the actual images of the complete object are obtainable by the imaging sensor, while in the prior art actual images of only parts of the object are obtainable and the residual three dimensional information are merely extrapolated information on their basis.

Of course, very good results are still obtainable when the rotation axis of the rotary part and the main axis do not form an angle being exactly 90 degrees but being in a range of 80 to 100 or even 70 to 110 degrees.

In other words, according to the present invention "the rotation axis is perpendicular to the main axis" means that the axes are substantially perpendicular, i.e., are in a maximum range of 70 to 110 degrees.

Preferably, the rotation axis is near the sample holder, i.e., near the sample. More preferably, the rotation axis passes through the sample holder. Even more preferably, the rotation axis passes through the sample.

The aperture is arranged at a position which is preset in advance of the imaging process and is fixed relative to the light source throughout the imaging process. In other words, the light source and the aperture do not move relative to each other during one (the same) imaging process (measuring cycle or sequence). This means that the light source and the aperture are stationary relative to each other during one (the same) imaging process. However, during (dis)assembly or maintenance of the apparatus or between distinct imaging processes, the light source might be movable relative to the aperture and vice versa.

The imaging sensor is arranged at a position which is preset in advance of the imaging process and is fixed relative to the light source and to the aperture throughout the imaging process. In other words, the imaging sensor, the light source and the aperture do not move relative to each other during one (the same) imaging process (measuring cycle or sequence). This means that the imaging sensor, the light source and the aperture are stationary relative to each other during one (the same) imaging process. However, during (dis)assembly or maintenance of the apparatus or between distinct imaging processes, the imaging sensor, the light source and the aperture might be movable relative to the each other.

Preferably, the apparatus includes a wavefront modulation device in its rotary part. Although the quality of the three dimensional information obtained when using the wavefront modulation device is much better than of those obtained without the wavefront modulation device, the wavefront modulation device is not necessary and thus not essential for the present invention.

Preferably, the wavefront modulation device includes a grid of pixels. More preferably, the grid of pixels is arranged in one plane (the primary plane of the wavefront modulation device).

The function of the wavefront modulation device is similar to that of a lens in a conventional apparatus. In other words the wavefront modulation device can be thought of as a programmable lens.

The apparatus is configured to modify the light pattern through a pattern programmed on the wavefront modulation device.

The wavefront modulation device is arranged in the apparatus between the sample holder and the imaging sensor along the main axis.

The wavefront modulation device is arranged at a position which is preset in advance of the imaging process and is fixed relative to the light source, to the aperture, and to the imaging sensor throughout the imaging process. In other words, the wavefront modulation device, the light source, the aperture, and the imaging sensor do not move relative to each other during one (the same) imaging process (measuring cycle or sequence). This means that the wavefront modulation device, the light source, the aperture, and the imaging sensor are stationary relative to each other during one (the same) imaging process. However, during (dis)assembly or maintenance of the apparatus or between distinct imaging processes, the wavefront modulation device, the light source, the aperture, and the imaging sensor might be movable relative to the each other.

Preferably, the distance between the aperture and the light source is a first distance. The distance between the imaging sensor and the sample holder is a second distance. More preferably, the distance between the wavefront modulation device and the sample holder is a third distance. The distance between the imaging sensor and the wavefront modulation device is a fourth distance.

The first distance is in a range of 0mm to 20mm. Preferably, the first distance is in a range of 0mm to 12mm. More preferably, the first distance is in a range of 0mm to 5mm. The second distance is in a range of 2mm to 408mm. Preferably, the second distance is in a range of 4mm to 304mm. More preferably, the second distance is in a range of 8mm to 201mm. The third distance is in a range of 0mm to 8mm. Preferably, the third distance is in a range of 0mm to 4mm. More preferably, the third distance is in a range of 0mm to 1mm. The fourth distance is in a range of 2mm to 400mm. Preferably, the fourth distance is in a range of 4mm to 300mm. More preferably, the fourth distance is in a range of 8mm to 200mm.

The first distance is calculated by using typical distances at which commercially available light sources such as LEDs are considered to be semi or fully coherent. These distances are dependent on the coherence lengths of the used light sources. When using LEDs as the light source, it has to be kept in mind that currently commercially available LEDs usually have a short coherence length. However, the first distance can be increased when a light source having a longer coherence length is used. The third distance is calculated in view of an optimal lateral resolution. The fourth distance can be calculated using the Nyquist focal length relation. The second distance can be calculated as a sum of the third and the fourth distances.

Preferably, the rotary part includes a frame to which the light source, the aperture and the imaging sensor are attached. If the wavefront modulation device is used, it is also attached to the frame of the rotary part. Thus, these parts of the apparatus which are attached to the frame are arranged at fixed positions relative to each other and can rotate as one integral unit about the stationary sample holder (i.e., about the stationary sample) during the imaging process (the measuring cycle or sequence; more precisely, the construction part of the imaging process).

The rotational device is controlled by the at least one controller to rotate the rotary part and is preferably an electro-mechanical actuator. More preferably, the rotational device is a stepper motor or a servo motor. These kinds of rotational devices are advantageous in view of their simple and precise controllability and their reliability.

The stationary part of the apparatus includes a sample holder which holds the sample at a fixed position throughout the imaging process (the measuring cycle or sequence). The sample holder is preferably divided into sections which are capable of accommodating separate samples such that they are spatially isolated from each other. When using this preferred sample holder, the three dimensional imaging can be performed on more than one sample in one (the same) imaging process. This is advantageous in view of effects of scale, time and costs.

Preferably, the imaging sensor includes a grid of pixels. Each of the pixels is capable of measuring the amount of incident light. The imaging sensor is more preferably a complementary metal-oxide semiconductor (CMOS) sensor due to CMOS sensors generally having a smaller pixel size (distance between two neighboring pixels). A smaller pixel size allows construction of three dimensional information in a higher resolution.

Preferably, the imaging sensor is arranged behind the wavefront modulation device along the main axis, i.e., in the propagating direction of the light.

Preferably, the pixels of the imaging sensor are arranged in one plane (the primary plane of the imaging sensor). Light scattered on the sample is captured by the grid of pixels of the imaging sensor.

Preferably, the rotation device rotates the rotary part at a constant (angular) velocity throughout one (the same) imaging process (the measuring cycle or sequence; more precisely, the construction part of the imaging process). The constant velocity refers to the absolute value of the velocity and to the direction of the rotational movement. More preferably, the constant velocity is obtained by the application of a fixed voltage to the at least one controller.

The operation of the apparatus for generating three dimensional information of the semi transparent object within the sample includes illuminating the stationary sample holder which holds the sample at a fixed position throughout the imaging process with the semi or fully coherent light from the light source through the aperture along the main axis. The operation further includes obtaining a (scattered) light pattern from the sample by the image sensor. The operation also includes rotating the rotary part including the light source, the aperture, the imaging sensor and the wavefront modulation device (if used) about the rotation axis which is perpendicular to the main axis. During this rotation, the angular position of the rotary part is controlled and determined. Thus, the light pattern is obtained in angular intervals throughout the rotation of the rotary part about the rotation axis. At each angular interval of the rotation of the rotary part, the image sensor collects a single image and stores the image into a designated set of images. Finally, the three dimensional information is generated from these images by the controller.

The lens-free microscopic imaging method according to the present invention corresponds to the operation of the apparatus according to the present invention including its preferred embodiments. In other words, the method is carried out by using or operating the apparatus.

For the generation of the three dimensional information from the collected and stored images by the controller, k images, which are collected throughout a single imaging process or a single period of rotation of the rotary part are split into j groups with preferably equal intervals. More preferably, each group includes images with indices 0·(k-1)+n, 1·(k-1)+n, ..., (360/k-1)·(k-1)+n where n is an index of the respective group and wherein each group is used to obtain a distinct three dimensional information of the sample. This methodology allows tuning the three dimensional reconstruction algorithm either for better resolution or for higher frames per second. The tuning depends on the number of groups. A low number means that each group contains a higher number of reconstructions and in turn allows a higher resolution three dimensional information to be built. A high number of groups means a faster three dimensional information generation.

Above, a general concept of the apparatus and the method according to the present invention and of preferred features of the apparatus and the method has been described.

In the following, a preferred embodiment of the apparatus and the method according to the present invention will be described.
Fig. 1 shows a side view of the apparatus being a microscope.
Fig. 2 shows an isometric view of the rotary part of the apparatus.
Fig. 3 shows an isometric view of a part of the apparatus and particularly the sample holder along with the wavefront modulation device, the imaging sensor, and a part of the controller.
Fig. 4 shows a schematic side view of the apparatus and the sample including the object when viewed from the left side of Fig. 1 (when viewed from the direction of the rotation axis).
Fig. 5 shows another schematic side view of the apparatus and the sample including the object (corresponding to the side view of Fig. 4) and the image acquisition methodology of the apparatus.
Fig. 6 shows a flowchart of the three dimensional imaging process performed by the apparatus.
Fig. 7 shows a top view of a three dimensional information obtained from a reference slide (a glass plate with circular patterns on it).
Fig. 8 shows a top view of a three dimensional information obtained from a polystyrene (PS) bead.
Fig.9 shows two top views of two three dimensional information obtained from a single epithelial cell undergoing apoptosis.

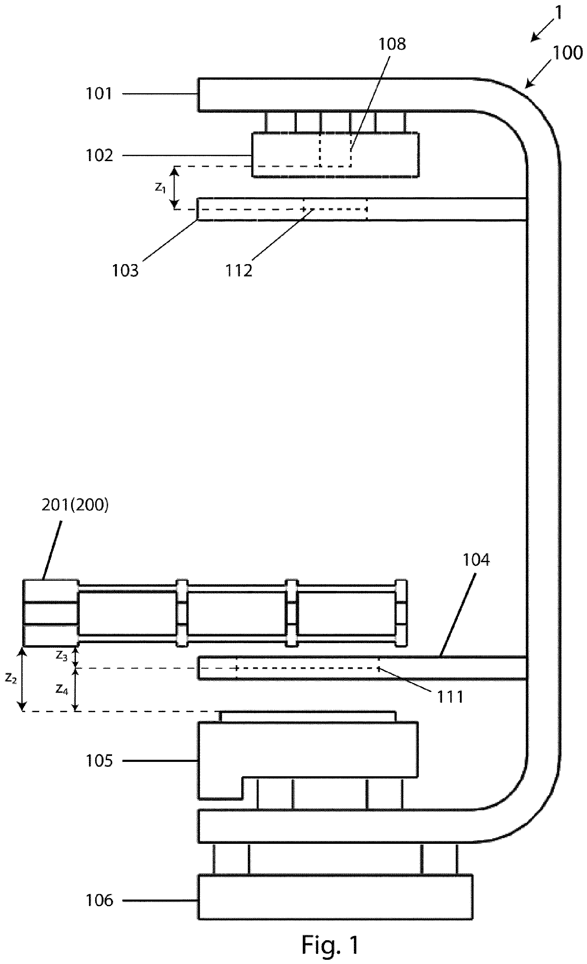

Fig. 1 is a side view of the apparatus 1 according to the present invention. The apparatus comprises two main units, the rotary part 100 and the stationary part 200.

The rotary part 100 comprises a frame 101, a light source holder 102, a first holder 103 for the aperture 110, a second holder 104 for the wavefront modulation device 111, an imaging sensor 105, a controller 106 which is used for reconstruction in the present embodiment, a light source 108, the aperture 110, the wavefront modulation device 111, and a plate 112.

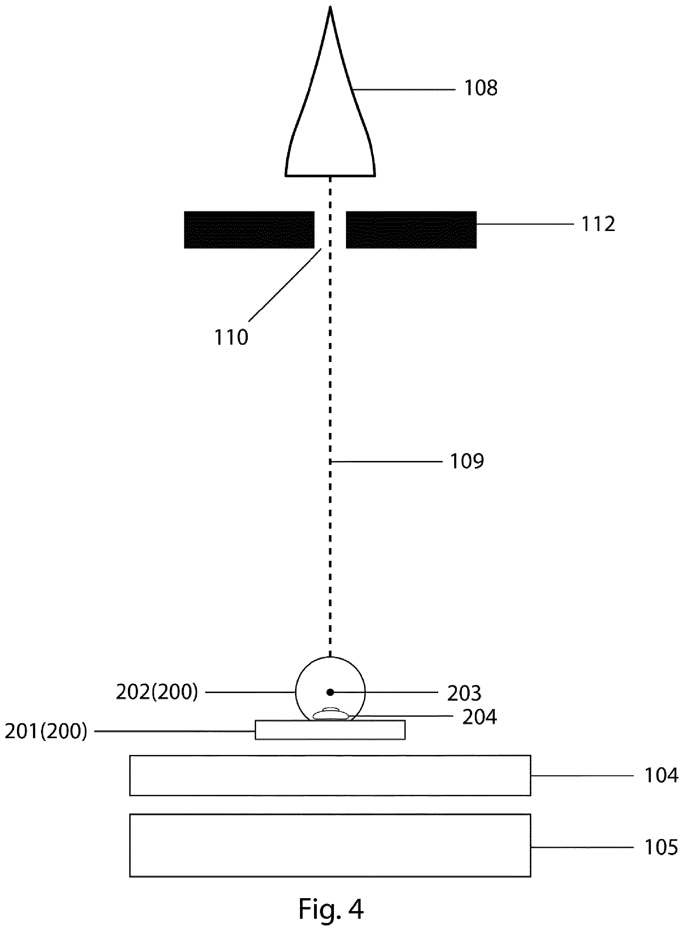

The light source holder 102, the first holder 103, the second holder 104, the imaging sensor 105 and the controller 106 are removably attached to the frame 101. The frame 101 has a C-shaped cross-section in the side view of Fig. 1. Thus, an integral rotary part 100 is obtained, which can rotate as one unit about the rotation axis 203 (see Fig. 4). The frame 101 (the rotary part 100) is rotatable by a rotational device (not shown), which is controllable by a part of the controller which is not shown in the figures.

The light source holder 102 accommodates the light source 108 as indicated by broken lines in Fig. 1. The light source 108 is, for example, a LED in the present embodiment.

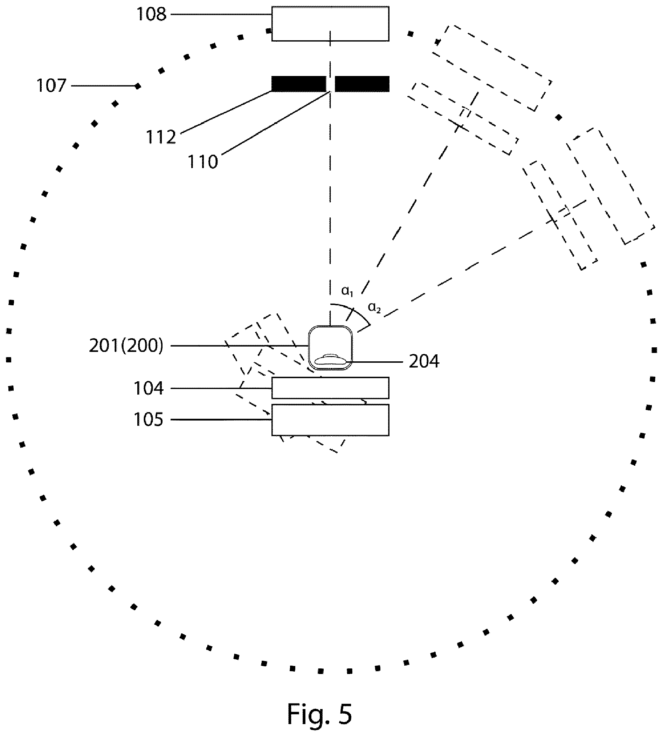

The first holder 103 accommodates the plate 112 as indicated by broken lines in Fig. 1. The plate 112 is a thin metal or plastic sheet. The aperture 110 is provided in the plate 112 (see Figs. 4 and 5). The plate 112 (and thus the aperture 110) is spaced apart from the light source 108 (from the part of the light source 108 being closest to the aperture 110) by a first distance z₁ as shown in Fig. 1. In the present embodiment, the plane of the LED being closest to the aperture is the primary plane of the light source 108.

The light source 108 and/or the aperture 110 preferably have rotational symmetry about the main axis 109 (see Fig. 4).

The second holder 104 accommodates the wavefront modulation device 111 as indicated by broken lines in Fig. 1. The wavefront modulation device 111 includes a grid of pixels. Each pixel includes a minuscule mirror that rotates upon the application of a small electrical field. The pattern programmed on the wavefront modulation device is controlled through the controller. Light waves which are diffracted on the sample 202 pass through the wavefront modulation device 111. A phase of the light scattered on the sample 202 is modified through the pattern programmed on the wavefront modulation device 111.

The imaging sensor 105 includes a grid of pixels. Each pixel is configured to measure the amount of light incident upon it. The imaging sensor 105 is, for example, a CMOS sensor in the present embodiment. The distance between the imaging sensor 105 and the wavefront modulation device 111 is a fourth distance z₄ as shown in Fig. 1. More precisely, the fourth distance z₄ is the distance between the plane in which the pixels of the CMOS sensor are arranged (primary plane of the imaging sensor 105) and the plane on which the minuscule mirrors are arranged in the wavefront modulation device 111 (primary plane of the wavefront modulation device 111).

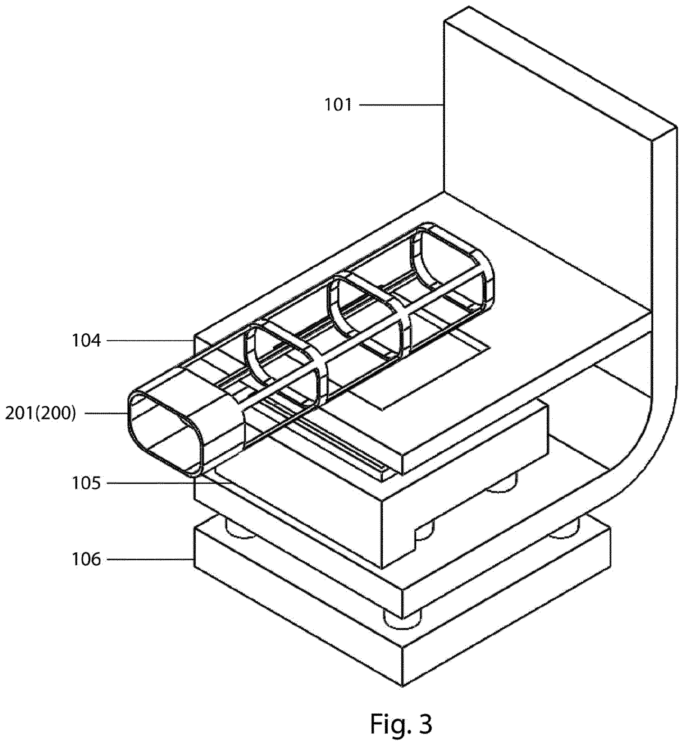

The stationary part 200 accommodates the sample holder 201 which is configured such that a cylindrical tube holding the sample 202 can be fitted inside. The sample holder 201 comprises multiple parts (see Figs. 1 and 3). Each part can accommodate a separate sample 202 isolated from the others.

The wavefront modulation device 111 (the plane on which the minuscule mirrors are arranged) is spaced apart from the sample holder 201 (from the part of the sample holder 201 being closest to the wavefront modulation device 111) by a third distance z₃ as shown in Fig. 1.

Accordingly, the second distance z₂ being the distance between the imaging sensor 105 (the plane in which the pixels of the CMOS sensor are arranged) and the sample holder 201 (the part of the sample holder 201 being closest to the imaging sensor 105) corresponds to a sum of the third distance z₃ and the fourth distance z₄.

As shown in Figs. 1, 4 and 5, the order of the arrangement of the constituents of the apparatus 1 from the viewpoint of the light generated by the light source 108 is the light source 108, the aperture 110, the sample holder 201 including the sample 202, the wavefront modulation device 111 (in Figs. 4 and 5 only the second holder 104 for the wavefront modulation device 111 is depicted) and the imaging sensor 105. In other words, the semi or fully coherent light is emitted from the light source 108, propagates parallel to the main axis 109, and passes through the aperture 110. After having passed the aperture 110, the light propagates further parallel to the main axis 109 and reaches the sample 202. The semi transparent object 204 in the sample 202 partially reflects, refracts and transmits the light. Accordingly, a part of the light having passed the sample 202 is incident on the wavefront modulation device 111 as scattered light. The wavefront modulation device 111 passes the light and modifies the phase of the light. Finally, the light is incident on the imaging sensor 105.

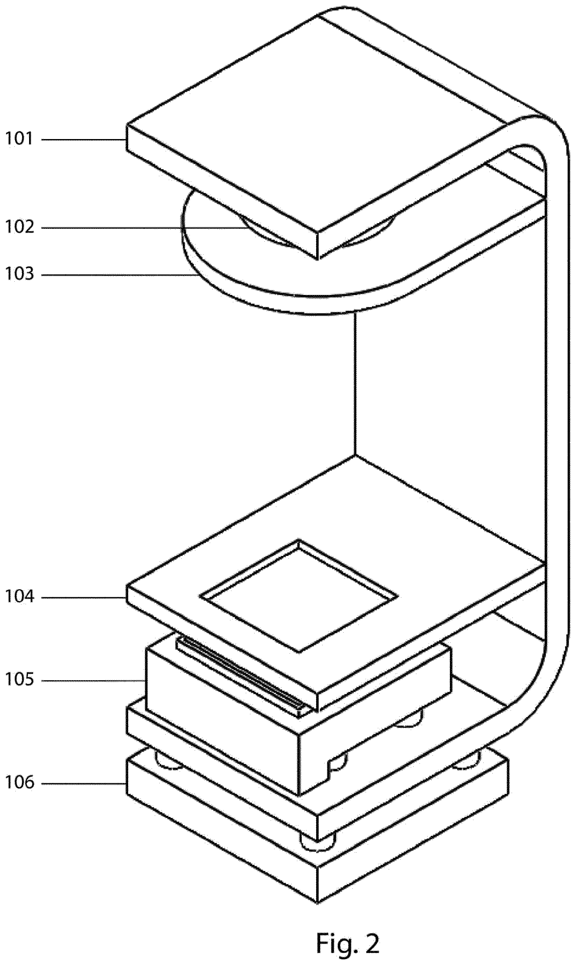

Fig. 2 shows an isometric view of the rotary part 100 of the apparatus 1. The sample holder 201 is not depicted in this figure.

Fig. 3 shows an isometric view of the lower portion of the rotary part 100 and of a portion of the stationary part 200, namely the sample holder 201.

Fig. 4 shows the schematic configuration of the apparatus 1 as a side view as seen parallel to the rotation axis 203 of the rotary part 100. The rotation axis 203 extends perpendicular to the plane of the sheet of Fig. 4. The main axis 109 lies in the plane of the sheet of Fig. 4. That is, in the present embodiment, the main axis 109 and the rotation axis 203 enclose an angle of 90 degrees. The light source 108, the plate 112 with the aperture 110 formed therein, the second holder 104 accommodating the wavefront modulation device 111 and the imaging sensor 105 are aligned along the main axis 109 and integrally rotate about the rotation axis 203.

In the present embodiment the rotation axis 203 passes through the sample 202. In particular, the rotation axis 203 is arranged in the center of the cylindric sample 202.

In Fig. 4 only the lower portion of the sample holder 201 is exemplarily shown.

Fig. 5 is a schematic view corresponding to that of Fig. 4 and illustrates how the rotary part 100 integrally rotates about the rotation axis 203 (see Fig. 4). The position of the rotary part 100 at the start of the imaging process (the measurement) is shown using solid lines. Two exemplary positions of the rotary part 100 during the imaging process (the measurement) are shown by broken lines at the angles α₁ and α₂ from the initial position.

It becomes clear that the elements of the apparatus 1 being attached to the frame 101 together rotate about the stationary part 200, i.e., about the sample holder 201, the sample 202 (see Fig. 4) and the object 204, which maintains its position throughout the rotation of the rotary part 100 as depicted by Fig. 5.

Each angular position 107 of the rotation path of the rotary part 100 is exemplary marked in Fig. 5. For example, there might be 360 angular positions 107 during one (the same) imaging process (more precisely during the construction part thereof). The angles between any of the two angular positions 107 are exemplarily shown as α₁ and α₂. The angles α₁ and α₂ might have the same value, i.e., the angular positions 107 might be equidistant. However, the angles α₁ and α₂ might also differ from each other.

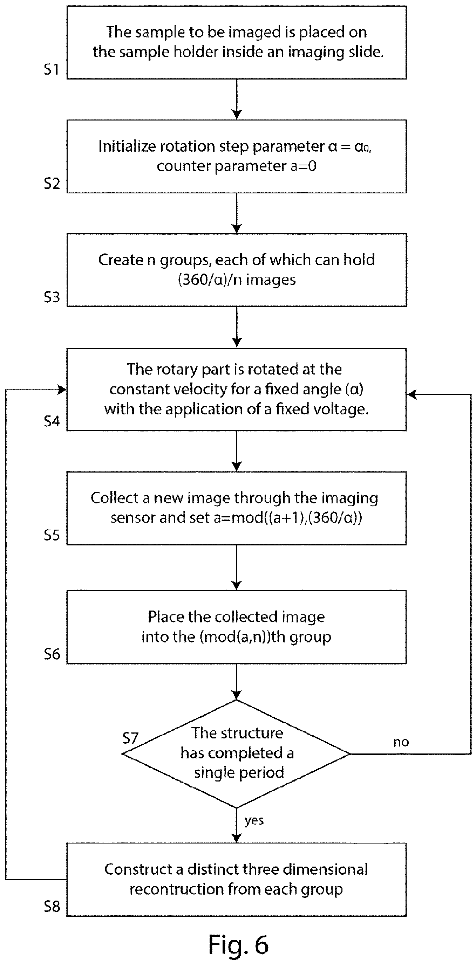

Fig. 6 shows a flowchart depicting the imaging process, which the apparatus 1 (more precisely its controller) carries out to generate the three dimensional information of the object 204. In other words, Fig. 6 shows the imaging method according to the present invention.

First, the sample 202 including the objects 204 to be analyzed is placed on or inside the sample holder 201 (step S1).

Then, an initialization step is performed (step S2). A rotation step parameter α, which corresponds to the angles between two angular positions 107, is initialized to become α₀. Also, a counter parameter a is initialized to become zero.

At the next step, n groups are created (step S3). Each of the n groups can hold (360/α)/n images.

The rotary part 100 is then rotated at a constant velocity for a preset angle α (step S4). This is achieved by applying a constant voltage to the controller. The controller, in turn, drives the rotation device to rotate the rotary part 100.

During the rotation of the rotary part 100, the imaging sensor 105 collects a new image at each angular position 107. The controller sets a = mod((a+1), (360/α)) (step S5). The parameter a is used to determine to which group the next reconstruction will be placed. It is incremented at each step and is set back to zero once it reaches 360/α.

Then, the collected image is stored into the (mod(a, n))th group (step S6).

Afterwards, the controller determines whether the rotary part 100 has completed a single period of rotation (360 degrees) (step S7). If the period of rotation is not completed, steps S4 to S7 are repeated. If the period of rotation has been completed, the controller proceeds to step S8.

In the next step (step S8), a distinct three dimensional information from each group is generated.

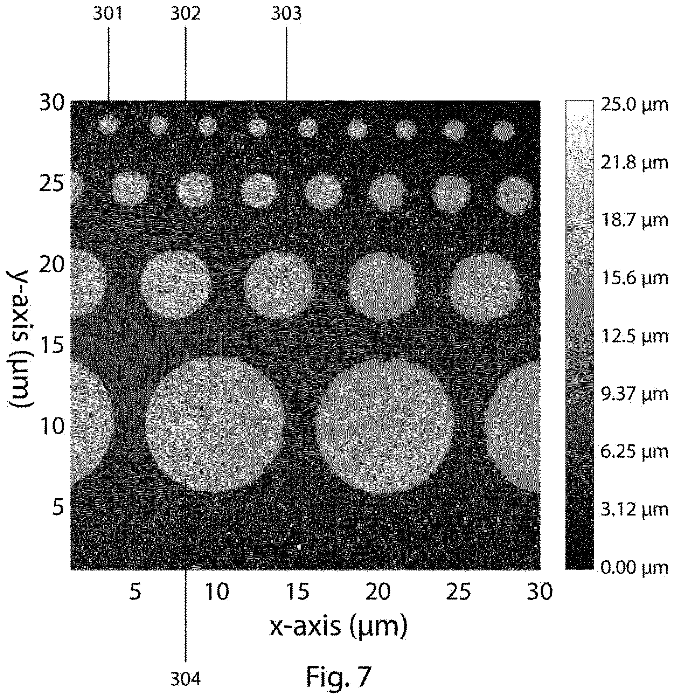

Fig. 7 shows a top view of a three dimensional information obtained from an optical reference slide that is commonly used for optical calibration. The smallest circles 301 had a diameter of about 1µm, the next largest circles 302 had a diameter of about 2µm, the next largest circles 303 had a diameter of about 4µm and the largest circles 304 had a diameter of about 8µm. The slide itself had a thickness of about 500µm. A light source with a 670nm wavelength was used. The imaging was done using a CMOS sensor with a pixel size of 1.6µm.

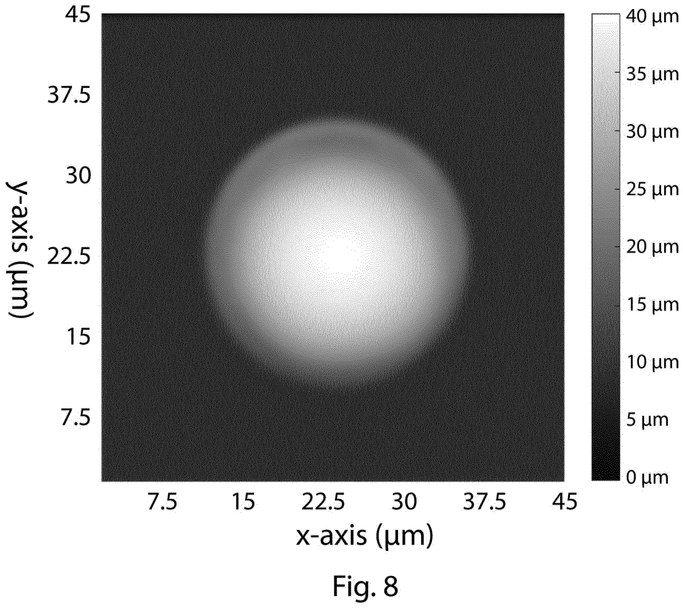

Fig. 8 shows a top view of a three dimensional information obtained from a PS micro bead. The micro bead had a spherical shape with a diameter of about 25µm. The PS bead was placed inside a deionized water solution of 60 milliliters volume which was placed within a glass container of 24x24mm width and height. The glass container had a thickness of 200µm. A light source with a 670nm wavelength was used. The imaging was done using a CMOS sensor with a pixel size of 1.6µm.

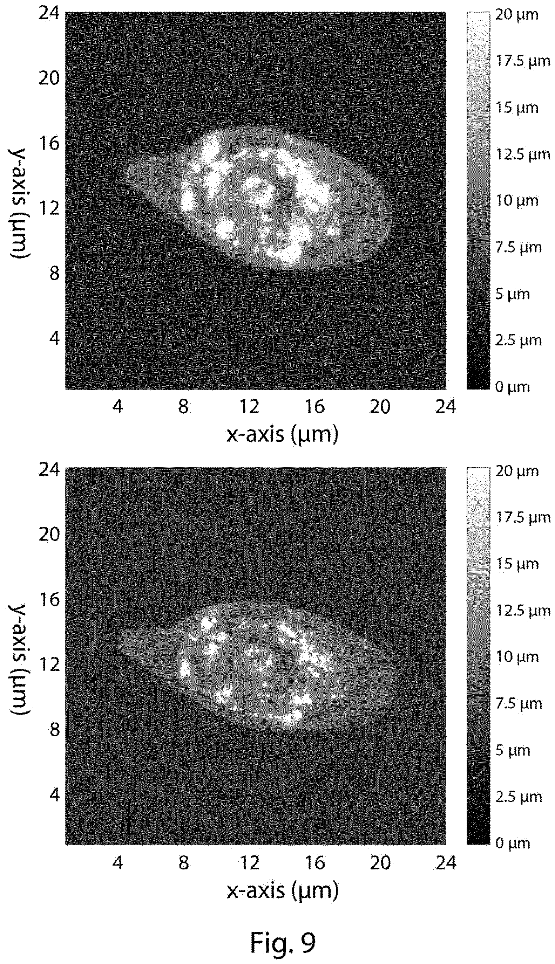

Fig. 9 shows two top views of two three dimensional information obtained from an epithelial cell undergoing apoptosis. Both three dimensional information were taken from the same cell after treatment of the cell with hydrogen peroxide which is a known trigger for apoptosis. The first (upper) three dimensional information was obtained immediately after the treatment and the second (lower) three dimensional information was obtained about six-hours after the treatment. During apoptosis the nucleus of the cell disintegrates. Disintegrated parts of the nucleus are seen to be brighter within the cell. The experiments were done within a glass container of 24x24mm width and height. The glass container had a thickness of 200µm. A light source with a 532nm wavelength was used. The imaging was done using a CMOS sensor with a pixel size of 1.6µm.

## Claims

1. A lens-free microscopic imaging apparatus (1) for three dimensional imaging of a semi transparent object (204) within a sample (202), comprising:
a rotation device configured to rotate a rotary part (100) of the apparatus (1) and to control the angular position of the rotary part (100) about a rotation axis (203),
a determining device configured to determine the angular position of the rotary part (100),
at least one controller configured to control the rotation device and to generate a three dimensional information from images captured by an imaging sensor (105),
a stationary part (200) comprising a sample holder (201) configured to hold the sample (202) at a fixed position throughout an imaging process, and
the rotary part (100) comprising:
a semi coherent or fully coherent light source (108) configured to illuminate the sample (202),
an aperture (110) for passing the light from the light source (108) along a main axis (109), the aperture (110) being arranged at a preset fixed position relative to the light source (108) throughout the imaging process, and
the imaging sensor (105) arranged at a preset fixed position relative to the light source (108) and to the aperture (110) throughout the imaging process, wherein
the rotation axis (203) is perpendicular to the main axis (109).

2. The imaging apparatus (1) according to claim 1, wherein
the rotary part (100) further comprises a wavefront modulation device (111) for the light arranged between the sample holder (201) and the imaging sensor (105) along the main axis (109) at a preset fixed position relative to the light source (108), to the aperture (110) and to the imaging sensor (105) throughout the imaging process.

3. The imaging apparatus (1) according to claim 1 or 2, wherein
the apparatus (1) is configured such that, throughout the imaging process,
the light source (108), the aperture (110), the imaging sensor (105), and preferably the wavefront modulation device (111) are attached to a frame (101) of the rotary part (100), and are thus arranged at fixed positions relative to each other and are configured to rotate as one unit about the stationary sample holder (201), and/or
the rotary part (100) is rotatable by at least 360 degrees about the rotation axis (203).

4. The imaging apparatus (1) according to any of the preceding claims, wherein
the aperture (110) is arranged at a first distance z₁ relative to the light source (108), and
the imaging sensor (105) is arranged at a second distance z₂ relative to the sample holder (201), preferably,
the wavefront modulation device (111) is arranged at a third distance z₃ relative to the sample holder (201), and
the imaging sensor (105) is arranged at a fourth distance z₄ relative to the wavefront modulation device (111), more preferably,
the first distance z₁ is in a range of 0 mm to 20 mm, preferably 0 mm to 12 mm, more preferably 0 mm to 5 mm, and/or
the second distance z₂ is in a range of 2 mm to 408 mm, preferably 4 mm to 304 mm, more preferably 8 mm to 201 mm, and/or
the third distance z₃ is in a range of 0 mm to 8 mm, preferably 0 mm to 4 mm, more preferably 0 mm to 1 mm, and/or
the fourth distance z₄ is in a range of 2 mm to 400 mm, preferably 4 mm to 300 mm, more preferably 8 mm to 200 mm.

5. The imaging apparatus (1) according to any of the preceding claims, wherein
the light source (108), the aperture (110), the imaging sensor (105), and preferably the wavefront modulation device (111), of the rotary part (100) are aligned on the main axis (109) being a common axis, and
preferably are configured such that their primary planes are parallel to one another and to the rotation axis (203), and are perpendicular to the main axis (109).

6. The imaging apparatus (1) according to any of the preceding claims, wherein
the rotational device is an electro-mechanical actuator, preferably a stepper motor or a servo motor.

7. The imaging apparatus (1) according to any of the preceding claims, wherein
the sample holder (201) includes more than one section, wherein each section is configured to accommodate a separate sample (202) spatially isolated from other samples (202) which can be accommodated in other sections.

8. The imaging apparatus (1) according to any of the preceding claims, wherein
the imaging sensor (105) includes a grid of pixels each being configured to measure the amount of light incident upon it, wherein the imaging sensor (105) is preferably a complementary metal-oxide semiconductor/CMOS sensor.

9. The imaging apparatus (1) according to claim 8, wherein the imaging sensor (105) is arranged behind the wavefront modulation device (111) in a propagating direction of the light and is configured in such a way that the light scattered on the sample (202) is captured by the grid of pixels.

10. The imaging apparatus (1) according to any of the preceding claims, wherein
the rotation device is configured to rotate the rotary part (100) by at least 360 degrees about the rotation axis (203) during the imaging process, preferably at a constant velocity throughout the imaging process, more preferably by the application of a fixed voltage to the controller.

11. A lens-free microscopic imaging method through which three dimensional information of a semi transparent object (204) within a sample (202) can be generated, comprising:
illuminating a stationary sample holder (201) configured to hold the sample (202) at a fixed position throughout an imaging process with a semi coherent or fully coherent light from a light source (108) through an aperture (110) along a main axis (109) and obtaining a light pattern from the sample (202) by an imaging sensor (105), the aperture (110) being arranged at a preset fixed position relative to the light source (108), the imaging sensor (105) being arranged at a preset fixed position relative to the light source (108) and to the aperture (110) throughout the imaging process,
rotating the light source (108), the aperture (110) and the imaging sensor (105) about a rotation axis (203) being perpendicular to the main axis (109) while controlling and determining the angular position of the light source (108), the aperture (110) and the imaging sensor (105), thus obtaining the light pattern in angular intervals throughout the rotation about the rotation axis (203),
at each angular interval, collecting a single image by the imaging sensor (105) and storing the image into a designated set of images, and
generating the three dimensional information from the images captured by the imaging sensor (105).

12. The imaging method according to claim 11, comprising:
at each angular interval, modifying the light pattern through a pattern programmed on a wavefront modulation device (111).

13. The imaging method according to claim 11 or 12, wherein
the light source (108), the aperture (110), the imaging sensor (105), and preferably the wavefront modulation device (111) are rotated by at least 360 degrees about the rotation axis (203) during the imaging process, preferably at a constant velocity throughout the imaging process, more preferably by the application of a fixed voltage.

14. The imaging method according to any of claims 11 to 13, wherein k images are collected throughout a single period of rotation of the light source (108), the aperture (110), the imaging sensor (105), and preferably the wavefront modulation device (111), and the collected images are split into n groups with equal intervals, and
wherein, preferably, each group includes images with indices 0·(k-1)+n, 1·(k-1)+n, ..., (360/k-1)·(k-1)+n where n is an index of the respective group and wherein each group is used to obtain a distinct three dimensional information of the sample (202).

15. The imaging apparatus according to any of claims 1 to 10 or the imaging method according to any of claims 11 to 14, wherein
the rotation axis (203) passes through the sample holder (201), preferably through the sample (202) placed in or on the sample holder (201).
